Europäisches Patentamt

European Patent Office

Office européen des brevets

(19)

(11) Veröffentlichungsnummer: **0 253 069**
**B1**

(12) ## EUROPÄISCHE PATENTSCHRIFT

(45) Veröffentlichungstag der Patentschrift:
**10.01.90**

(21) Anmeldenummer: **87105408.6**

(22) Anmeldetag: **11.04.87**

(51) Int. Cl.⁴: **F 16 J 9/20, F 16 J 9/08**

(54) **Tribologisch optimierte Kolbenringabdichtung.**

(30) Priorität: **14.04.86 DE 3612454**
**14.04.86 DE 3612455**
**14.04.86 DE 3612456**

(43) Veröffentlichungstag der Anmeldung:
**20.01.88 Patentblatt 88/3**

(45) Bekanntmachung des Hinweises auf die Patenterteilung:
**10.01.90 Patentblatt 90/2**

(84) Benannte Vertragsstaaten:
**DE ES FR GB IT**

(56) Entgegenhaltungen:
**FR-A- 862 845**
**US-A- 1 343 828**
**US-A- 1 354 548**
**US-A- 1 537 787**
**US-A- 1 613 410**
**US-A- 2 209 925**

(73) Patentinhaber: **Stecher, Friedhelm, Lohrstr. 72,**
**D-5090 Leverkusen-Hitdorf (DE)**

(72) Erfinder: **Stecher, Friedhelm, Lohrstr. 72,**
**D-5090 Leverkusen-Hitdorf (DE)**

(74) Vertreter: **Weber, Otto Ernst, Dipl.-Phys. et al, Weber &**
**Heim Hofbrunnstrasse 36, D-8000 München 71 (DE)**

## Beschreibung

Die Erfindung betrifft selbstspannende Kolbenringe nach dem Oberbegriff des Anspruches 1 in Verbindung mit Kolben nach dem Oberbegriff des Anspruches 3, wie sie vornehmlich zur Gasabdichtung in Verbrennungsmotoren eingesetzt werden.

Kolbenringe sind tribologisch hoch beanspruchte Bauteile, deren Funktion und Lebensdauer deshalb durch Verschleiss beeinträchtigt wird. Es gibt typische Verschleissformen der Kolbenringe, der Kolbennuten und der Zylinderlaufbüchse, die unter bestimmten Bedingungen immer wieder auftreten.

Beispiele hierfür sind der Verschleiss im oberen Totpunkt der Zylinder beim Dieselmotor sowie der sogenannte Druckvertwistverschleiss (Literatur SAE-Technical-Paper-Series 790863, 09/79), durch den die Form der Unterflanken von Ring und Kolbennut betroffen ist und der den Einsatz von axial niedrigen Ringen begrenzt. Die Form der Flanken lässt eine Twistbewegung des Ringes als den verursachenden Bewegungsablauf der Ringflanke gegenüber der Nutflanke erkennen. Ausserdem zeigen die Laufflächen im Bereich der Stossenden der Kolbenringe vielfach einen mehrfach höheren Verschleiss als der Ringrückenbereich. Hierdurch kommt es z. B. beim Dieselmotor neben der Lebensdauerbeschränkung zu frühzeitigen Anlassproblemen infolge undichter Stossenden.

Es ist bekannt, als Gegenmassnahme bei solchen Verschleissproblemen mit dem Einsatz verschleissfester Werkstoffe, z. B. in Form von Schichten, und mit Oberflächenbehandlungen wie Härten, Nitrieren zu reagieren. Dies ist allerdings mit höheren Kosten verbunden und führt zudem vielfach zu einer Verlagerung des Verschleissproblems auf die Gleitpartner.

Eine grundsätzlich andere Möglichkeit zur Verringerung des örtlich erhöhten Verschleisses besteht darin, die Schmierung zu verbessern und dadurch gleichzeitig beide Verschleisspartner zu entlasten. Nach neueren Erkenntnissen transportieren die Kolbenringe einen Teil ihres Ölfilms über eine Schleppströmung selbst mit, wodurch der Ölfilm zwischen Ringlauffläche und Zylinderwand wesentlich dicker als auf der Zylinderwand vor und hinter dem Ring ist. Hebt aber die Ringlauffläche von der Zylinderwand ab, so reisst der Ölfilm. Beim erneuten Aufsetzen der Ringlauffläche fehlt diese Ölmenge und die Folge sind Schmierungsstörungen.

Der Erfindung liegt die Aufgabe zugrunde, diese den örtlichen Verschleiss fördernden Schmierungsstörungen zu vermindern.

Die der Erfindung innewohnende neue Erkenntnis besagt, dass diese Schmierungsstörungen ihre Ursache in der Eigenbewegung der Kolbenringe in der Kolbennut haben, die von den Stossenden ausgeht.

Die erfindungsgemässe Lösung sieht deshalb vor, die Stossbereiche der Kolbenringe während der Arbeitsphase auch unter dem Einfluss der nach oben gerichteten Massenkraft sicher an der Unterflanke der Kolbennut zu halten. Diesem Ziel dienen alle in den Ansprüchen 1 bis 4 dargestellten Massnahmen.

In Anspruch 1 wird die Forderung nach sicherer Untenanlage der Stossbereiche dadurch gelöst bzw. unterstützt, dass die Stossenden massearm gestaltet werden. Durch radiale Verjüngung des Ringquerschnittes zu den Stossenden hin oder durch Aussparungen im Ringquerschnitt wird die Ringmasse stark verringert.

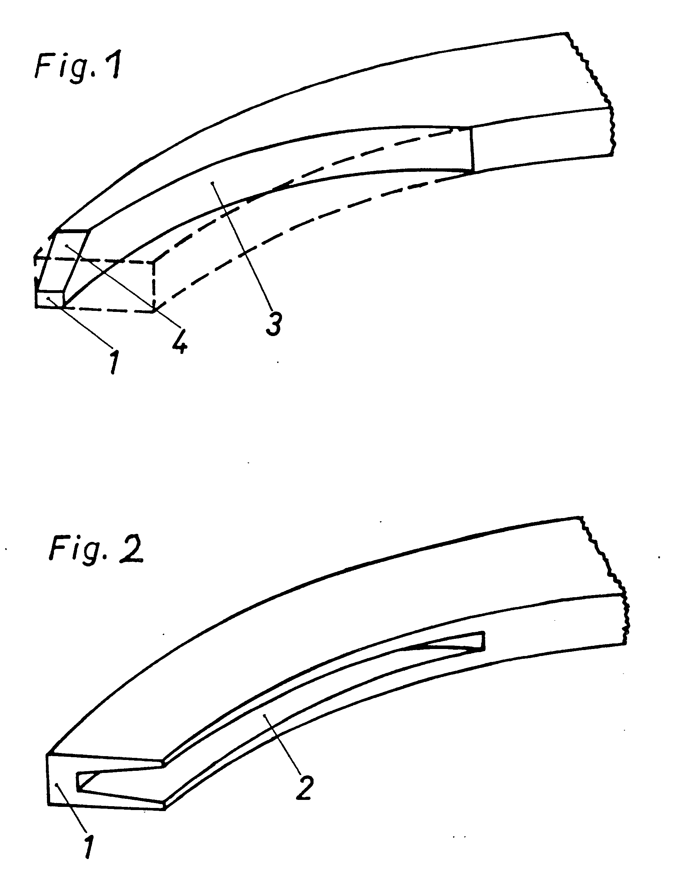

Diese Verjüngung sollte sich über eine Umfangslänge von mindestens 2 × Wanddicke erstrecken und am Stoss minimal den halben Querschnitt ausmachen. Für Aussparungen gilt sinngemäss die gleiche Massenverringerung. Figur 1 und 2 zeigen mögliche Ausführungsformen. Die Wirksamkeit dieser radialen Massenverringerung kann erfindungsgemäss noch durch eine axial verlaufende Abschrägung verbessert werden. Die radiale und axiale Massenabnahme zu den Stossenden hin kann auch von einer konischen Fläche begrenzt werden.

In der amerikanischen Patentschrift US-A-1 343 828 wird zwar ebenfalls ein Kolbenring mit verjüngten Stossenden beschrieben; da sich diese aber überlappen, wird so keine Massenverringerung erreicht.

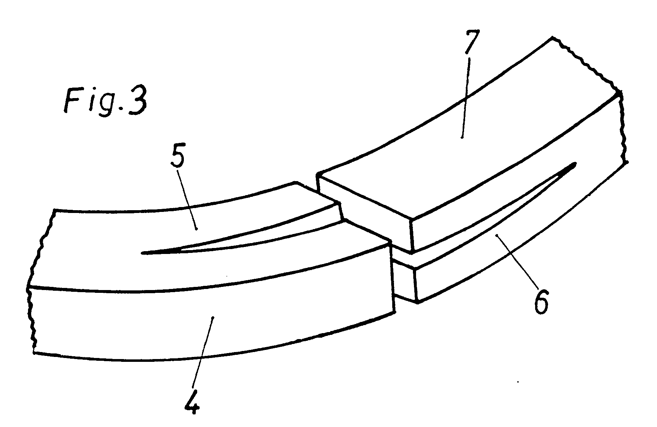

Nach Anspruch 2 ist die für das tribologische Verhalten wichtige Anlage an der Unterflanke auch durch federnde Vorspannung zu verbessern. Hierfür werden die Stossenden der Ringe in Umfangsrichtung so geteilt und vorgebogen, dass im eingebauten Zustand der für die Abdichtung wichtige Ringteil mit Vorspannung auf der Nutunterflanke anliegt (Figur 3).

Die in Anspruch 3 angegebene Massnahme unterstützt die Druckbeaufschlagung des Ringes, indem das unter die untere Ringflanke eingedrungene Druckgas zwischen Zylinderwand und Kolbensteg nach unten entspannt wird. Der Kolbensteg soll einerseits möglichst weit an die Zylinderwand heranreichen, um einen minimalen freien Durchtrittsquerschnitt für das abzudichtende Gas im Bereich des Kolbenringstosses zu gewährleisten.

Andererseits soll das vom Stossende in Umfangsrichtung zwischen Ring- und Nutflanke eingedrungene Gas leicht zwischen Kolbensteg und Zylinderwand nach unten abströmen, um ein sicheres Anliegen der Stossbereiche auf der Unterflanke zu gewährleisten.

Die erfindungsgemässe Lösung für diese Aufgabe sieht vor, dass der Kolbensteg zum Druckabbau eine Anzahl senkrecht oder schräg verlaufender Gasableitungskanäle aufweist, die den Druckaufbau an der Unterflanke verhindern und den freien Gasdurchtrittsquerschnitt am Ringstoss im Durchschnitt nicht wesentlich erhöhen. Wenn nämlich der Ringstoss gerade senkrecht über einer solchen Druckentlastungsnut steht, so ist zwar in diesem Augenblick der Querschnitt vergrössert und damit die Leckagemenge ebenfalls; diese Konstellation ist aber relativ selten gegeben, weil diese Kanäle meistens vom Kolbenring verdeckt sind. Der Vorteil der besseren Abdichtfunktion der Ringe durch die sicher unten anliegenden Stossenden wiegt die zusätzliche Leckagemenge bei Überdeckung einer dieser Entlastungsnuten mit dem Ringstoss bei weitem auf.

## Patentansprüche

1. Selbstspannende Kolbenringe mit zwei einen Stoss bildenden Stossenden, dadurch gekennzeichnet, dass sich der Ring über eine Umfangslänge von mindestens 2 Wanddicken zu den Stossenden hin radial und/oder axial so verjüngt (3, 4), dass am Stoss nur noch maximal die halbe Querschnittsfläche (1) (Figur 1) vorliegt oder die sinngemäss gleiche Massenverringerung durch Aushöhlung (2) des Ringquerschnittes geschieht und die so entstandene Querschnittsverringerung nicht durch Überlappung durch das andere Stossende aufgefüllt wird.

2. Kolben mit selbstspannenden Kolbenringen, bei denen ein aufgeschnittener Kolbenring mit seinen beiden Stossenden in der Kolbennut nur bei gleichzeitiger Anlage des Ringes an der unteren Nutflanke (Unterflanke) und der Zylinderwand ausreichend abdichtet, dadurch gekennzeichnet, dass die Ringe an den Stossenden so geteilt und vorgebogen sind, dass sich eine federnde Abstützung des abdichtenden Teils (4, 6) auf die untere Nutflanke durch die Abstützung des anderen Teils (5, 7) an der oberen Nutflanke ergibt.

3. Kolben für schnellaufende Maschinen, dadurch gekennzeichnet, dass der Kolbensteg unterhalb insbesondere des ersten Kompressionsringes Druckentlastungskanäle in der Aussenfläche zwischen erster und zweiter Nut aufweist, die senkrecht, schräg oder bogenförmig ausgeführt sind und einen Querschnitt aufweisen, der eine ausreichende Druckentlastung der Unterflanke der ersten Nut zur zweiten Nut ermöglicht und bei Überschneidung mit dem Stoss des Ringes kein zu grosses Blowby ergibt.

4. Kolben nach Anspruch 3, dadurch gekennzeichnet, dass diese Entlastungskanäle über dem Umfang des Kolbensteges unterschiedlich verteilt angeordnet sind, wobei z. B. auf der Druckseite (Kolbenanlage an der Zylinderwand im Expansionshub) die grössere Anzahl vorhanden ist.

## Claims

1. Self-expanding piston rings with two abutting ends forming a gap, characterized in that the ring so radially and/or axially tapers (3, 4) to the abutting ends over a circumferential length of at least two wall thicknesses, that at the gap there is only a maximum of half the cross-sectional surface (1) (fig. 1), or the corresponding identical mass reduction takes place by hollowing out (2) the ring cross-section and the resulting cross-sectional reduction is not filled by overlap by the other abutting end.

2. Piston with self-expanding piston rings, in which a split piston ring with its two abutting ends in the piston groove only provides an adequate sealing in the case of simultaneous engagement of the ring on the lower groove side (underside) and the cylinder wall, characterized in that the rings are so split and prebent at the abutting ends, that there is a resilient supporting of the sealing part (4, 6) on the lower groove side through the supporting of the other part (5, 7) on the upper groove side.

3. Piston for high speed motors, characterized in that the piston land is provided below in particular the first compression ring with pressure relief channels in the outer face between the first and second grooves, which are perpendicular, inclined or arcuate and have a cross-section permitting an adequate pressure relief of the underside of the first groove to the second groove and no excessive blow-by occurs in the case of overlap with the ring gap.

4. Piston according to claim 3, characterized in that these relief channels are differently distributed over the circumference of the piston land and the larger number is e.g. provided on the pressure side (piston engagement on the cylinder wall in the expansion stroke).

## Revendications

1. Segment de piston autoserrant comportant deux extrémités formant un joint, segment caractérisé en ce qu'il va en diminuant sur sa périphérie (3, 4) radialement et/ou axialement à partir d'au moins deux épaisseurs de parois pour qu'au niveau du joint, il ne subsiste au maximum que la moitié de la surface (1) de la section (figure 1) ou que, de façon analogue, il se produise la même réduction de masse par une creusure (2) de la section du segment et que la réduction de section ainsi obtenue ne soit pas remplie par chevauchement par l'autre extrémité du joint.

2. Piston muni de segments de piston autoserrants, un segment de piston fendu et ses deux extrémités de jonction assurant l'étanchéité suffisante que si le segment vient simultanément en appui contre le flanc inférieur de la gorge (flanc inférieur) et la paroi du cylindre, piston caractérisé en ce que les segments sont divisés aux extrémités du joint et sont courbés préalablement pour réaliser un appui élastique de la partie d'étanchéité (4, 6) contre le flanc inférieur de la gorge par appui de l'autre partie (5, 7) contre le flanc supérieur de la gorge.

3. Piston pour moteur rapide, caractérisé en ce que la jupe du piston, notamment en dessous du premier segment de compression, comporte des canaux de décharge de pression dans la surface supérieure entre la première et la seconde gorge, canaux qui sont perpendiculaires, inclinés ou courbes, et ont une section qui permet une décharge suffisante de la pression du flanc inférieur de la première gorge vers la seconde gorge et n'engendre pas de blowby trop important lors du débordement avec le joint du segment.

4. Piston selon la revendication 3, caractérisé en ce que ces canaux de décharge sont répartis différemment à la périphérie de la jupe du piston et le nombre le plus important de tels canaux se trouve par exemple du côté de la pression (appui du piston contre la paroi du cylindre dans la phase d'expansion).

Fig.1

Fig. 2

Fig.3